(19) Europäisches Patentamt / European Patent Office / Office européen des brevets

(11) **EP 2 989 321 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(21) Anmeldenummer: **14714225.1**

(22) Anmeldetag: **25.03.2014**

(51) Int Cl.:
*F03D 9/25* *(2016.01)*  *F03D 7/02* *(2006.01)*
*F03D 7/04* *(2006.01)*

(86) Internationale Anmeldenummer:
**PCT/EP2014/055992**

(87) Internationale Veröffentlichungsnummer:
**WO 2014/173600 (30.10.2014 Gazette 2014/44)**

(54) **VERFAHREN ZUM STEUERN EINES WINDPARKS**

METHOD OF CONTROLLING A WIND PARK

PROCÉDÉ DE RÉGLAGE D'UN PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.04.2013 DE 102013207264**

(43) Veröffentlichungstag der Anmeldung:
**02.03.2016 Patentblatt 2016/09**

(73) Patentinhaber: **Wobben Properties GmbH**
**26607 Aurich (DE)**

(72) Erfinder:
• **BUSKER, Kai**
**26629 Großefehn (DE)**
• **BEEKMANN, Alfred**
**26639 Wiesmoor (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
DE-A1-102008 039 429   DE-A1-102009 030 725
DE-A1-102011 112 025   US-A1- 2005 042 098
US-A1- 2010 138 058   US-A1- 2011 301 769

**Beschreibung**

Die vorliegende Erfindung betrifft ein Verfahren zum Einspeisen elektrischer Leistung eines mehrere Windenergieanlagen aufweisenden Windparks in ein elektrisches Versorgungsnetz. Weiterhin betrifft die vorliegende Erfindung einen dazu geeigneten Windpark.

Windparks sind heutzutage allgemein bekannt und sie beschreiben eine Ansammlung von Windenergieanlagen, die eine gemeinsame Einheit bilden. Insbesondere ist ein solcher Windpark durch einen gemeinsamen Netzanschlusspunkt (PCC; "point of common coupling") definiert. Über diesen gemeinsamen Netzanschlusspunkt speisen alle Windenergieanlagen in das Versorgungsnetz ein.

Optimalerweise speisen die Windenergieanlagen und damit der Windpark so viel Leistung in das Versorgungsnetz, wie aufgrund der vorherrschenden Windbedingungen möglich ist. Es kann auch Situationen geben, in denen eine Reduktion der eingespeisten Leistungen wünschenswert ist, wie beispielsweise im Fall eines Leistungsüberangebotes in dem Versorgungsnetz. Umgekehrt kann es auch in Erwartung eines erhöhten Leistungsbedarfs im Netz sinnvoll sein, die Leistung des Windpark unter den derzeit möglichen Wert zu reduzieren, um dann die eingespeiste Leistung erhöhen zu können, wenn der erwartet hohe Bedarf im Netz plötzlich auftritt.

Aus der Patentanmeldung US 2005 0042098 A1 ist es bekannt, dass der Netzbetreiber einem Windpark einen prozentualen Leistungswert vorgeben kann, der bezogen auf die Nennleistungen des Parks einen geringeren, gewünschten, einzuspeisenden Leistungswert vorgibt. Möchte der Netzbetreiber beispielsweise, dass der Park maximal halbe Nennleistung einspeist, so kann der Netzbetreiber einen Wert von 50 Prozent an den Park geben. Dieser Wert wird dann an die Windenergieanlagen weitergegeben, die ihre Leistung entsprechend reduzieren und somit nicht mehr als halbe Nennleistung eingespeist wird.

Problematisch kann es hierbei sein, wenn beispielsweise eine Windenergieanlage ausgefallen ist. Dann liefert diese ausgefallene Anlage konsequenterweise gar keine Leistung. Die übrigen Anlagen können entsprechend mehr Leistungen liefern, wenn sie den Ausfall dieser einen Anlage kennen würden und auch die Leistungshöhe bekannt wäre, die durch den Ausfall dieser einen Windenergieanlage durch die verbleibenden Windenergieanlagen kompensiert werden könnte. Ein solcher Informationsaustausch und die Koordination der Windenergieanlagen zum Kompensieren dieser Ausfallleistung ist jedoch kompliziert. Dabei ist auch zu berücksichtigen, dass manche Windparks Windenergieanlagen unterschiedlicher Leistungen beinhalten und teilweise sogar Windenergieanlagen unterschiedlicher Hersteller in dem Park vorhanden sind, sogenannte Mischparks.

Das Deutsche Patent- und Markenamt hat in der Prioritätsanmeldung folgenden Stand der Technik recherchiert: DE 10 2009 030 725 A1, DE 10 2011 112 025 A1 und US 2005/0042098 A1.

Der vorliegenden Erfindung liegt somit die Aufgabe zugrunde, wenigstens eines der oben genannten Probleme zu adressieren. Zumindest soll eine Lösung vorgeschlagen werden, die die Einspeisung eines Windparks in ein elektrisches Versorgungsnetz möglichst optimal koordiniert. Zumindest soll eine alternative Lösung vorgeschlagen werden.

Erfindungsgemäß wird ein Verfahren gemäß Anspruch 1 vorgeschlagen. Demnach wird von einem Windpark ausgegangen, der mehrere Windenergieanlagen aufweist, die in ein elektrisches Versorgungsnetz gemeinsam einspeisen. Jede Windenergieanlage stellt hierbei eine elektrische Anlagenleistung bereit. Diese elektrische Anlagenleistung bezeichnet die jeweilige Wirkleistung, die die jeweilige Windenergieanlage aktuell bereitstellt. Es wird somit unter einer Leistung oder einer Anlagenleistung oder Parkleistung grundsätzlich Wirkleistung $P$ verstanden.

Die Summe aller bereitgestellten Leistungen der Windenergieanlagen dieses Windparks, sofern sie jedenfalls dem vorgeschlagenen Verfahren unterliegen, bildet die Parkleistung, die in das elektrische Versorgungsnetz eingespeist wird.

Es wird nun ein Anlagen-Soll-Wert an jede der Windenergieanlage gegeben. Dieser Anlagen-Soll-Wert gibt der jeweiligen Windenergieanlage die Höhe der bereitzustellenden Anlagenleistungen vor. Jede der Windenergieanlagen ist also versucht, so viel Wirkleistung zu erzeugen und bereitzustellen, wie durch diesen Anlagen-Soll-Wert aktuell vorgegeben wird. Das kann auch bedeuten, dass die Windenergieanlagen oder auch nur eine einzelne Windenergieanlage unter dem Vorgabewert bleiben, wenn beispielsweise die vorherrschenden Windbedingungen nur einen geringeren Wert ermöglichen. Es kann auch dann ein geringerer Wert eingespeist werden, wenn andere Randbedingungen das Bereitstellen von Leistung in Höhe des Anlagen-Soll-Wertes nicht zulassen. Es wird somit nun vorgeschlagen, dass der Anlagen-Soll-Wert über einen Regler geregelt wird. Diese Regelung erfolgt so, dass die eingespeiste Parkleistung, nämlich insbesondere am gemeinsamen Netzanschlusspunkt mit einem Soll-Wert der einzuspeisenden Parkleistung verglichen wird. Dieser Soll-Wert kann beispielsweise von dem Netzbetreiber des Versorgungsnetzes vorgegeben sein. Bei diesem Vergleich wird eine Abweichung bestimmt, die hier als Regelabweichung verwendet wird. Abhängig von dieser Regelabweichung wird nun der Anlagen-Soll-Wert geregelt.

Es wird somit nicht der vorgegebene Soll-Wert der einzuspeisenden Parkleistung einfach weitergegeben oder zunächst auf die einzelnen Anlagen umgerechnet und dann weitergegeben, sondern es wird die tatsächliche Parkleistung mit der vorgegebenen Parkleistung verglichen und abhängig davon ein Soll-Wert vorgegeben. Ergibt der Vergleich beispielsweise, dass die eingespeiste Parkleistung noch über der gewünschten Leistung liegt, wird der Anlagen-Soll-Wert dementsprechend weiter reduziert. Die Verteilung dieser Parkleistung auf die einzelnen Windenergieanlagen, deren Anlagenleistungen in dieser Parkleistung aufsummiert sind, braucht hierbei nicht bekannt zu sein. Ob alle Anlagen des Parks eine vergleichsweise geringe Anlagenleistung bereitstellen oder ob einige Anlagen gerade ausgefallen sind und die übrigen Anlagen eine weniger stark reduzierte Anlagenleistung bereitstellen, braucht nicht überprüft zu werden.

Vorzugsweise gibt der Regler als Anlagen-Soll-Wert einen relativen Soll-Wert aus, der auf die jeweilige Nennleistung der Windenergieanlage bezogen ist. Insbesondere wird ein entsprechender prozentualer Soll-Wert ausgegeben. Außerdem oder alternativ wird an jede Windenergieanlage derselbe Wert gegeben. So kann beispielsweise der Regler zunächst an alle Windenergieanlagen den Wert 100 Prozent ausgeben, nämlich insbesondere dann, wenn der Soll-Wert der einzuspeisenden Parkleistung 100 Prozent beträgt bzw. keine Vorgabe für die Parkleistung gemacht wurde, der Park also so viel Leistung einspeisen darf, wie aktuell gerade möglich ist.

Jede Windenergieanlage erhält also dann den Wert 100 Prozent als Anlagen-Soll-Wert. Damit kann jede Windenergieanlage so viel Leistung wie möglich einspeisen. Bei dieser veranschaulichten Betrachtung wird davon ausgegangen, dass die Nennleistung der Anlage die maximal mögliche Leistung ist, auch wenn die meisten Anlagen theoretisch bei entsprechenden Windverhältnissen mehr Leistung als ihre Nennleistung erzeugen könnten. In einem üblichen Betriebsverhalten der Windenergieanlage kann jedoch der Leistungsnennwert als praktischer Maximalwert angenommen werden.

Wird nun der Soll-Wert reduziert und wird vereinfachend davon ausgegangen, dass alle Windenergieanlagen in Betrieb sind und derzeit Nennleistung bereitstellen, ergibt sich zunächst eine Differenz zwischen dem Soll-Wert der einzuspeisenden Parkleistung und der tatsächlich eingespeisten Parkleistung. Aufgrund dieser erkannten Differenz, nämlich der Regelabweichung, wird nun der Anlagen-Soll-Wert reduziert. Im Falle einer P-Regelung kann diese Reduktion auch zunächst sprunghaft erfolgen, wenn auch die Änderung des Soll-Werts der einzuspeisenden Parkleistung, der vereinfachend als Park-Soll-Wert bezeichnet wird, sprunghaft ist. Es kommen aber auch andere Reglertypen, wie beispielsweise ein PI-Regler in Betracht. Der Anlagen-Soll-Wert wird somit beispielsweise auf 80 Prozent reduziert, wenn beispielsweise auch der vorgegebene Park-Soll-Wert 80 Prozent betrug. Die Windenergieanlagen passen nun ihre Anlagenleistung entsprechend dem Soll-Wert an und reduzieren sie beispielsweise, um ein sehr einfaches und auch sehr vereinfachtes Beispiel zu nennen, auf 80 Prozent. Die Gesamtparkleistung, die eingespeist wird, reduziert sich dann also auch auf 80 Prozent und der gewünschte Soll-Wert der Parkleistung wäre somit erreicht.

Fällt nun eine Windenergieanlage aus, wird sich entsprechend die eingespeiste Parkleistung um die Leistung reduzieren, die diese ausgefallene Anlage vor ihrem Ausfall eingespeist hat. Beispielsweise erreicht die Parkleistung nur noch 70 Prozent und liegt damit unter dem Park-Soll-Wert. Dies erkennt der Regler und erhöht den Anlagen-Soll-Wert.

Dieser erhöhte Soll-Wert der Anlagenleistung wird in alle Windenergieanlagen übertragen, einschließlich der Anlage, die ausgefallen ist, obwohl dies für sie zunächst keine Auswirkung hat. Die übrigen Anlagen erhöhen aber ihre Leistung, bis die tatsächlich eingespeiste Parkleistung den Park-Soll-Wert erreicht hat, sofern dies überhaupt möglich ist. In diesem Fall beträgt beispielsweise der Vorgabe-Soll-Wert nun 85 Prozent und möglicherweise liefern alle Windenergieanlagen im Park 85 Prozent jeweils ihrer Nennleistung. Nur die ausgefallene Anlage liefert 0 Prozent ihrer Nennleistung.

Im Ergebnis ist somit eine Koordination aller Windenergieanlagen im Park vorgenommen worden, ohne dass im Einzelnen bekannt war, wie viel Leistung welche Windenergieanlage erzeugen kann. Auch welche der Anlagen gemäß dem erläuterten Beispiel ausgefallen ist, braucht hierfür nicht erfasst zu werden, weil gemäß dieser Ausführungsform der Vorgabewert auf die jeweilige Windenergieanlage, nämlich im vorliegenden Fall auf die Nennleistung der jeweiligen Windenergieanlage bezogen ist, kann für alle Anlagen derselbe Wert vorgegeben werden, nämlich 85 Prozent im letzten Zustand des angeführten Beispiels. Für die eine 1-MW-Windenergieanlage bedeutet dies 85 Prozent von einem Megawatt während es für eine 7,5-MW- Windenergieanlage 85 Prozent von 7,5 Megawatt bedeutet.

Alternativ kann aber auch für jede Windenergieanlage ein eigener Vorgabewert ermittelt werden, was aber nicht die favorisierte Lösung des Problems ist.

Die Verwendung eines relativen, bzw. normierten Soll-Wertes als Anlagen-Soll-Wert ermöglicht somit auch auf einfache Weise, dass an jede Windenergieanlage derselbe Wert gegeben wird. Es braucht also tatsächlich nur ein einziger Wert ausgerechnet und an jede Windenergieanlage übertragen zu werden.

Gemäß einer Ausführungsform wird vorgeschlagen, dass für den Regler der Reglertyp und außerdem oder alternativ seine Parametrierung verändert wird. Hierdurch können unterschiedliche Situationen oder Betriebsbedingungen des Windparks und/oder des Versorgungsnetzes berücksichtigt werden. Dies kann temporäre als auch dauerhafte Situationen oder Betriebsbedingungen betreffen. Beispielsweise kann der Windpark an einem starken oder an einem schwachen Netz angeschlossen sein und dieser Regler, der den Anlagen-Soll-Wert abhängig von dem Park-Soll-Wert bestimmt, kann dies berücksichtigen. Auch eine zu erwartende Schwankung der Leistungsbilanz im Netz kann berücksichtigt werden. Ebenso kann beispielsweise die Dynamik bzw. die mögliche Dynamik des Windparks berücksichtigt werden.

Es wird gemäß eine Ausführungsform vorgeschlagen, dass eine solche Änderung des Reglertyps und/oder der Parametrierung über ein Auswahlsignal vorgenommen wird. Über ein solches Auswahlsignal kann der Parkbetreiber und/oder der Betreiber des Versorgungsnetzes eine entsprechende Vorgabe machen. Erwartet beispielsweise der Netzbetreiber in Kürze eine sprunghafte Änderung der verfügbaren oder der abgefragten Leistung, kann er beispielsweise über das Auswahlsignal einen Regler hoher Dynamik fordern. Dieser Regner hoher Dynamik kann durch eine entsprechende Parametrierung und/oder durch Auswahl eines entsprechend dynamischen Reglertyps erreicht werden.

Als weiteres Beispiel wäre eine Situation zu nennen, bei der dem Netzbetreiber Arbeiten im Netz bekannt sind, bei denen beispielsweise eine wichtige Netztrasse vorübergehend unterbrochen ist. Auch hier kann beispielsweise dann ein Regler angefordert werden, der eine bessere Stabilisierungswirkung für das so geschwächte Netz erreicht.

Eine solche angeforderte Änderung des Reglertyps kann auch bedeuten, dass der Regler, der den Anlagen-Soll-Wert regelt, einen weiteren Eingangsparameter berücksichtigt.

Gemäß einer Ausführungsform wird vorgeschlagen, dass die Änderungen des Reglertyps und/oder der Parametrierung abhängig von einer Netzsensitivität des Versorgungsnetzes erfolgt. Hierbei wird unter einer Netzsensitivität die Reaktion des Netzes, insbesondere bezogen auf den gemeinsamen Netzanschlusspunkt, auf eine Änderung einer Größe verstanden, die auf das Netz wirkt. Die Netzsensitivität kann als Differenz einer Netzreaktion im Bezug auf eine Differenz einer Netzeinflussgröße definiert werden. Insbesondere kommt im vorliegenden Fall eine Definition im Bezug auf eingespeiste Wirkleistung und Höhe der Netzspannung in Betracht. Vereinfacht kann beispielsweise für die Netzsensitivität NS die folgende Formel definiert werden:

$$NS = \frac{\Delta U}{\Delta P}$$

Hierbei bezeichnet $\Delta P$ die Änderung der eingespeisten Wirkleistung, nämlich der eingespeisten Parkleistung und $\Delta U$ die resultierende Änderung der Netzspannung U. Diese Differenzen werden über einen sehr kurzen Zeitraum gebildet, insbesondere im Bereich von einer Sekunde oder darunter und vorteilhafterweise kann auch statt dieser anschaulichen Formel über die Differenz der Spannung im Bezug auf die Differenz der Leistung entsprechend eine partielle Ableitung der Netzspannung U nach der eingespeisten Parkleistung P gebildet werden. Es kommt als Netzreaktion auch die Änderung der Netzfrequenz f in Betracht. Eine weitere Möglichkeit der Berücksichtigung der Netzsensitivität wäre über die Formel:

$$NS = \frac{\Delta f}{\Delta P}$$

Gemäß einer Ausführungsform wird vorgeschlagen, dass die Änderungen des Reglertyps und/oder der Parametrierung abhängig von einem Kurzschlussstromverhältnis (SCR) vorgenommen wird.

Das Kurzschlussstromverhältnis, das auch als SCR (Short Circuit Ratio) bezeichnet wird, bezeichnet das Verhältnis der Kurzschlussleistung zur Anschlussleistung. Hierbei wird unter Kurschlussleistung diejenige Leistung verstanden, die das betreffende Versorgungsnetz an dem betrachteten Netzanschlusspunkt, an dem die Windenergieanlage bzw. der Windpark angeschlossen ist, bereitstellen kann, wenn an diesem Netzanschlusspunkt an Kurzschluss auftritt. Die Anschlussleistung ist die Anschlussleistung der angeschlossenen Windenergieanlage bzw. des angeschlossenen Windparks und damit insbesondere die Nennleistung des anzuschließenden Generators bzw. die Summe aller Nennleistungen der Generatoren des Windparks. Das Kurzschlussstromverhältnis ist somit ein Kriterium zur Stärke des elektrischen Versorgungsnetzes in Bezug auf diesen betrachteten Netzanschlusspunkt. Ein auf diesen Netzanschlusspunkt bezogenes starkes elektrisches Versorgungsnetz weist meist ein großes Kurzschlussstromverhältnis von bspw. SCR = 10 auf.

Es wurde erkannt, dass das Kurzschlussstromverhältnis auch eine Information über das Verhalten des betreffenden Versorgungsnetzes am Netzanschlusspunkt gegeben kann. Dabei kann das Kurzschlussstromverhältnis auch Variieren.

Vorteilhaft ist es, bei der Neuinstallation eines Windparks oder einer Windenergieanlage das Kurzschlussstromverhältnis zu berücksichtigen und die Wirkleistungssteuerung und die Blindleistungssteuerung daran anzupassen. Es wird vorzugsweise weiter vorgeschlagen, das Kurzschlussstromverhältnis auch nach der Installation und Inbetriebnahme einer Windenergieanlage bzw. eines Windparks in regelmäßigen Abständen zu erfassen. Die Erfassung der Kurzschlussleistung kann bspw. über Informationen über die Netztopologie mit Hilfe einer Simulation erfolgen. Die Anschlussleistung kann einfach über die Kenntnis der installierten Windenergieanlagen in einem Park erfolgen und/oder sie kann über die Messung der eingespeisten Leistung bei Nennwind erfolgen.

Gemäß einer Ausgestaltung wird vorgeschlagen, dass als auswählbarer Reglertyp ein P-Regler, ein PI-Regler, ein PT1-Regler oder ein Hysterese-Regler zu Verfügung steht. Vorzugsweise kann der Regler auch an seinem Eingang oder an seinem Ausgang eine dynamische Begrenzung vorsehen, dass also im Falle dieser Begrenzung am Eingang der Park-Soll-Wert bzw. die resultierende Differenz zum Park-Ist-Wert nur mit einer begrenzten Steigung ansteigen darf. Eine ähnliche Steigungsbegrenzung kann alternativ am Ausgang, also für den erstellten Anlagen-Soll-Wert vorgesehen sein.

Ein aufgeführter Hysterese-Regler betrifft insbesondere eine Reglerausgestaltung, die nichtlinear ist und bei einem Anstieg der Regelabweichung anders reagiert als bei einem entsprechenden Abfall der Regelabweichung.

Eine weitere Ausgestaltung schlägt vor, dass eine Netzfrequenz der Spannung des Versorgungsnetzes erfasst wird, insbesondere nämlich am Netzanschlusspunkt. Der Anlagen-Soll-Wert wird dann abhängig von der Netzfrequenz eingestellt und/oder er wird abhängig von einer Änderung der Netzfrequenz eingestellt.

Beispielsweise kann der Anlagen-Soll-Wert reduziert werden, wenn die Netzfrequenz über der Nennfrequenz oder über einem Grenzwert oberhalb der Nennfrequenz liegt. Ist hierbei außerdem eine positive Netzfrequenzänderung erfasst worden, kann der Anlagen-Soll-Wert weiter reduziert werden. Ist hingegen die Netzfrequenzänderung negativ, bewegt sich die Netzfrequenz also wieder in Richtung zum nominalen Wert, kann eine geringere Leistungsreduktion und damit ein weniger geringer Anlagen-Soll-Wert vorgesehen sein. Eine solche Berücksichtigung der Netzfrequenz oder ihrer Änderung kann auch zusammen mit der Umsetzung eines Park-Soll-Wertes erfolgen.

Gemäß einer Ausführungsform setzt jede Windenergieanlage für sich eine frequenzabhängige oder von der Änderung der Frequenz abhängige Leistungsanpassung vor. Jede Windenergieanlage setzt hierbei also selber einen Algorithmus ein, der die bereitgestellte Anlagenleistung reduziert oder erhöht.

Vorzugsweise erfolgt auch die Änderung oder Auswahl des Reglertyps und/oder seiner Parametrierung abhängig von der festen Netzfrequenz und außerdem oder alternativ abhängig von einer Netzfrequenzänderung. So kann beispielsweise bei starken und schnellen Frequenzschwankungen, wenn entsprechend eine große Netzfrequenzänderung erfasst wird, ein besonders stabilisierender Regler für die Regelung des Anlagen-Soll-Wertes ausgewählt werden.

Vorzugsweise sind die folgenden grundlegenden Grundreglereinstellungen vorzusehen, die nachfolgend als Regelungsgrundtypen bezeichnet werden.

Gemäß einer Reglereinstellung erfolgt keine Reduzierung der Parkleistung. Das wird hier auch als erster Regelungsgrundtyp wird vorgeschlagen. Der Park-Soll-Wert wird hierbei nicht gesetzt bzw. auf 100 Prozent gesetzt. Da keine eingespeiste Parkleistung von über 100 Prozent zu erwarten ist, führt die Auswertung der Regelabweichung zwischen eingespeister Parkleistung und vorgesehener Parkleistung grundsätzlich zu einem negativen Wert oder maximal zum Wert 0. Die Regelung wird hierbei durch eine Begrenzung davon abgehalten, den Anlagen-Soll-Wert auf über 100 Prozent zu erhöhen. Alternativ kann dieser Anlagen-Soll-Wert aber auch auf über 100 Prozent erhöht werden, da auch dies bei den Anlagen zu keinem anderen Ergebnis führt als wenn dieser Wert 100 Prozent beträgt. Alternativ kann für diesen Regelfall, bei der die Parkleistung nicht reduziert werden soll, der Reglerausgang konstant auf 100 Prozent gesetzt werden, und/oder die Regelabweichung künstlich auf 0 gesetzt werden.

Als weitere Reglerkonstellation wird vorgeschlagen, dass die Parkleistung von extern, insbesondere durch den Betreiber des Versorgungsnetzes vorgegeben wird. Das wird hier als zweiter Regelungsgrundtyp bezeichnet. Der Regler bestimmt dann nur abhängig von der Regelabweichung zwischen vorgegebener Parkleistung und eingespeister Parkleistung den Anlagen-Soll-Wert. Der Anlagen-Soll-Wert wird also so lange durch den Regler angepasst, bis die eingespeiste Parkleistung der vorgegebenen Parkleistung entspricht, zumindest in der gewünschten Genauigkeit entspricht.

Als dritter Regelungsgrundtyp wird vorgeschlagen, dass ein Park-Soll-Wert vorgegeben wird und außerdem jede Windenergieanlage eine frequenzabhängige oder von einer Frequenzänderung abhängige Anpassung ihrer bereitgestellten Anlagenleistung vornimmt. Dieser dritte Regelungsgrundtyp entspricht somit dem zweiten Regelungsgrundtyp mit der Ergänzung, dass die einzelnen Windenergieanlagen eine frequenzabhängige oder frequenzänderungsabhängige Wirkleistungsregelung zusätzlich vorsehen.

Als vierter Regelungsgrundtyp bzw. Regelungsgrundtyp 4 wird nun vorgeschlagen, dass eine Parkleistung vorgegeben wird und der Regler einen Anlagen-Soll-Wert abhängig von der Regelabweichung zwischen Park-Soll-Wert und Park-Ist-Wert bestimmt und außerdem dabei noch die Netzfrequenz und/oder eine Änderung der Netzfrequenz berücksichtigt. Dies entspricht dem Regelungsgrundtyp 2 mit der Ergänzung, dass der Anlagen-Soll-Wert zusätzlich von der Netzfrequenz oder einer Netzfrequenzänderung abhängt. Hier kann zusätzlich vorgesehen werden, dass auch die Anlagen selbst eine frequenzabhängige Leistungsregelung beinhalten. Zur Vermeidung von gegenläufigen frequenzabhängigen Regelungen wird vorzugsweise aber eine frequenzabhängige Leistungsregelung für die Windenergieanlagen ausgeschlossen oder ausgeschaltet, wenn dies bereits von dem Regler zentral berücksichtigt wird, wie dies im Regelungsgrundtyp 4 vorgeschlagen wird.

Insbesondere eine Umschaltung zwischen diesen vier Regelungsgrundtypen wird vorgeschlagen. Und eine solche Umschaltung kann durch ein externes Signal vorgenommen werden, wie beispielswiese durch den Netzbetreiber. Eine solche Umschaltung kann auch abhängig von einer Netzsensitivitätserfassung und/oder einer Frequenz des Netzes und/oder einer Frequenzänderung vorgenommen werden. Wenn mehrere Kriterien berücksichtigt werden, können diese über eine Bewertungsfunktion kombiniert werden und über einen Schwellwert kann ein Kriterium vorgegeben werden, wann es tatsächlich zu einer Umschaltung kommt. Vorzugsweise wird auch hier ein Hystereseglied eingebaut, sodass ein ständiges Hin- und Herschalten zwischen zwei oder mehr Reglertypen insbesondere zwei oder mehr Regelungsgrundtypen vermieden wird.

Eine Umschaltung insbesondere zwischen den genannten Regelungsgrundtypen kann aber auch bei der Installation oder Inbetriebnahme des Parks erfolgen. Hierzu kann beispielsweise ein entsprechender Indikator, der auch Flag genannt wird, eingestellt werden. Insoweit bildet dieser Indikator oder dieses Flag auch ein Signal zum Einstellen oder Auswählen des entsprechenden Reglers.

Vorzugsweise kann ein Regelungsgrundtyp ausgewählt oder geändert werden und zusätzlich eine Parametrierung verändert werden. Zusätzlich kann auch als Inhalt des jeweils ausgewählten Regelungsgrundtyps ein Regler ausgewählt oder gewechselt werden, nämlich beispielsweise von einem PI-Regler auf einen Hysterese-Regler, um nur ein Beispiel zu nennen.

Vorzugsweise wird der Anlagen-Soll-Wert von einer Zentralsteuereinheit bestimmt. Der Regler befindet sich also in der Zentralsteuereinheit eines Windparks. Diese Zentralsteuereinheit kann eine gesonderte Einheit am Netzanschlusspunkt darstellen oder sie kann in einer Windenergieanlage vorgesehen sein, beispielsweise am Fuß einer Windenergieanlage, die in der Nähe des Netzanschlusspunktes aufgestellt ist. Die Zentralsteuereinheit kann vorzugsweise auch in einer Transformatoreinheit am Netzanschlusspunkt vorgesehen sein. Vorzugsweise umfasst diese Zentralsteuereinheit Messmittel zum Aufnehmen der Netzspannung und/oder der Netzfrequenz des Versorgungsnetzes.

Erfindungsgemäß wird zudem ein Windpark vorgeschlagen, der dazu vorbereitet ist, durch ein Verfahren gemäß einer der oben genannten Ausführungsformen betrieben zu werden. Insbesondere sollte dieser Windpark FACTS-fähig sein.

Das Verfahren zum Einspeisen elektrischer Leistung in ein Versorgungsnetz wird anhand von vielen Ausführungsformen beschrieben und betrifft die Einspeisung von Wirkleistung in das elektrische Versorgungsnetz. Ebenso ist es möglich, in dieser Art und Weise in das Netz einzuspeisende Blindleistung zu steuern, indem also für den Park ein Blindleistungs-Soll-Wert vorgegeben wird und ein entsprechender Anlagenblindleistungs-Soll-Wert von dem Regler bestimmt und an die Windenergieanlagen gegeben wird. Auch dies soll erfindungsgemäß bzw. als eigenständige Lehre beansprucht werden.

Nachfolgenden wird die Erfindung nun anhand von Ausführungsbeispielen unter Bezugnahme über die begleitenden Figuren mehr erläutert.

Figur 1 zeigt schematisch eine Windenergieanlage.

Figur 2 zeigt schematisch einen Windpark.

Figur 3 zeigt zur Veranschaulichung einen Windpark mit Regelungsstruktur.

Figur 4 zeigt einige Zeitdiagramme zum Veranschaulichen möglicher Regelungsverläufe.

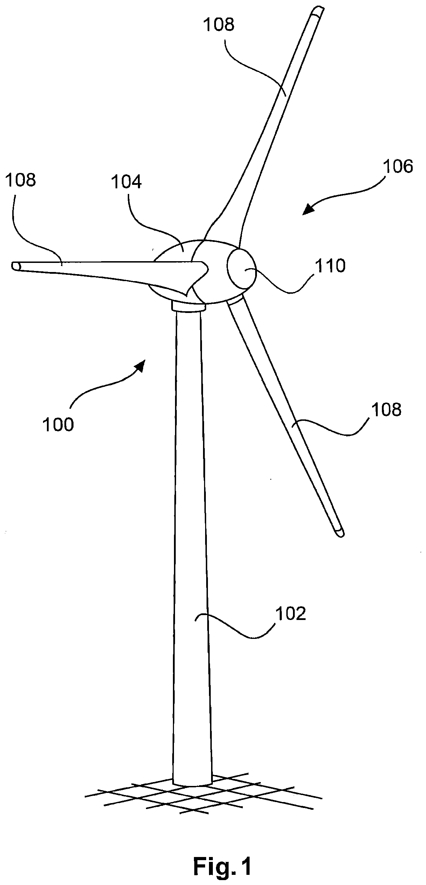

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

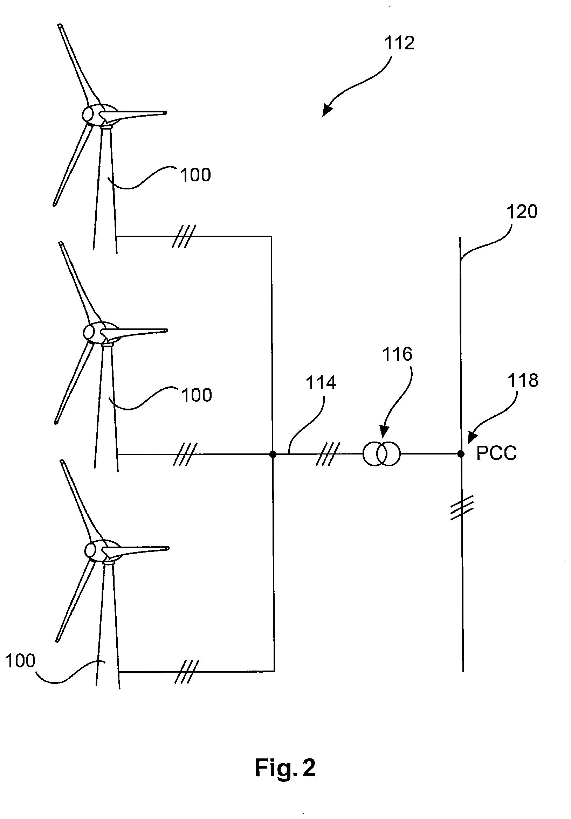

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen des Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hoch transportiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

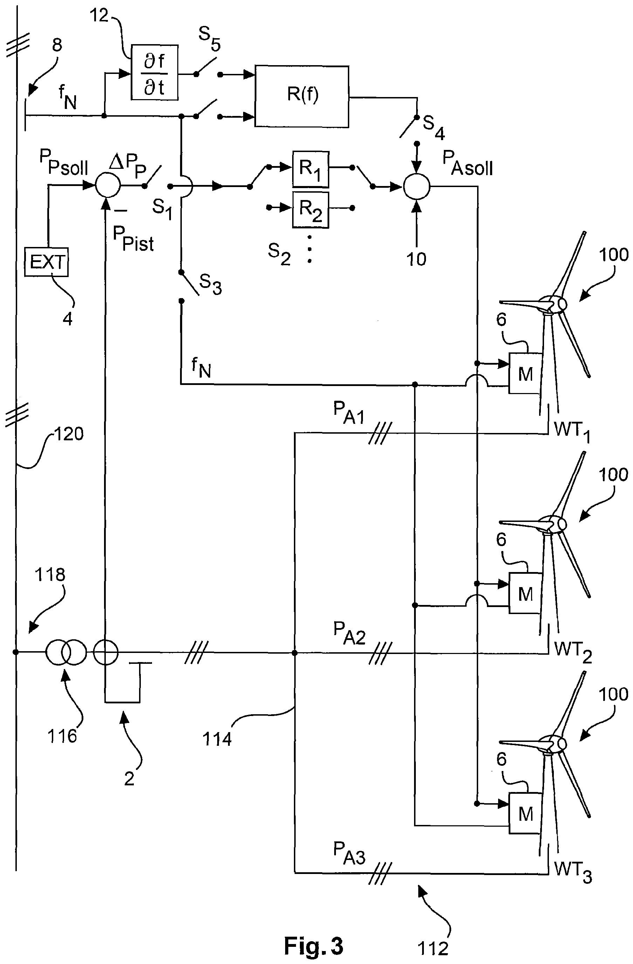

Fig. 3 zeigt insbesondere eine Regelungsstruktur eines Windparks 112, einschließlich eines Parknetzes 114. Soweit die Strukturen dieses Windparks 112 der Fig. 3 dem Windpark 112 der Fig. 2 zumindest ähneln, ist zur Erhöhung der Übersichtlichkeit jeweils zwischen Fig. 2 und 3 dasselbe Bezugszeichen gewählt. Insoweit zeigt der Windpark 112 der Fig. 3 auch ein Parknetz 114, das über einen Transformator 116 an einem Netzeinspeisepunkt 118 in ein Versorgungsnetz 120 einspeist. Sowohl das Parknetz 114 als auch das Versorgungsnetz 120, das vereinfachend auch nur als Netz bezeichnet werden kann, sind dreiphasig ausgeführt.

Eine Leistungsmesseinheit 2 misst die jeweils aktuell erzeugte Parkleistung $P_{Pist}$. Diese erzeugte Parkleistung wird an einer Summierstelle mit einer vorgegebenen Parkleistung $P_{Asoll}$ verglichen und liefert als Ergebnis eine Parkdifferenzleistung $\Delta P_P$. Der Park-Soll-Wert kann von einer externen Einheit 4 vorgegeben werden, wie beispielsweise vom Betreiber des Versorgungsnetzes 120.

Die so erfasste Differenz $\Delta P_P$ wird insoweit als Regelabweichung $\Delta P_P$ betrachtet. Diese Parkdifferenzleistung wird dann einem Regler $R_1$ zugeführt, wenn der Schalter $S_1$ geschlossen ist und der Schalter $S_2$ in der gezeigten Stellung ist. Der Regler $R_1$ erzeugt dann einen Anlagen-Soll-Wert $P_{Asoll}$, wenn der Schalter $S_4$ in der gezeigten geöffneten Stellung ist.

Sämtliche in Fig. 3 gezeigten Schalter $S_1$ bis $S_5$

dienen der Veranschaulichung in dieser Darstellung. Bei der tatsächlichen Umsetzung kann ihre Funktion, die nachfolgend noch beschrieben wird, häufig gänzlich anders umgesetzt werden.

Der so erzeugte Anlagen-Soll-Wert $P_{Asoll}$ wird dann jeder Anlagensteuerung 6 der jeweiligen Windenergieanlage 100 zugeführt. Jede Anlagensteuerung 6 steuert dann die jeweilige Anlage so, dass diese eine entsprechende Leistung $P_{A1}$, $P_{A2}$ bzw. $P_{A3}$ ausgibt bzw. zur Einspeisung in das Netz 120 bereitstellt. Gemäß einem Betriebszustand, der insbesondere durch die Fig. 3 wie gezeigt aber mit geschlossenen Schalter $S_1$ beschrieben wird, folgen diese einzelnen Anlagenleistungen $P_{A1}$, $P_{A2}$ bzw. $P_{A3}$ dem Anlagen-Soll-Wert $P_{Asoll}$. Der Anlagen-Soll-Wert $P_{Asoll}$ ist dabei eine normierte Größe, die beispielsweise zwischen 0 und 100 Prozent (also zwischen 0 und 1) liegt. In einer Ausführungsform, die auch der Beschreibung in Fig. 3 zugrunde liegt, bezieht sich der Anlagen-Soll-Wert $P_{Asoll}$ dabei jeweils auf die Nennleistung $P_N$ der jeweiligen Windenergieanlage 100. Beträgt beispielsweise die Nennleistung der ersten Windenergieanlage $WT_1$ ein MW und die Nennleistung der beiden anderen Windenergieanlagen $WT_2$ bzw. $WT_3$ jeweils zwei MW, bedeutet ein Wert von 50 Prozent für den Anlagen-Soll-Wert $P_{Asoll}$ eine Leistung von 500 kW für die erste Windenergieanlage $WT_1$ und jeweils einen Wert von 1 MW für die Windenergieanlage $WT_2$ und $WT_3$. Im gezeigten Beispiel würden also insgesamt 2, 5 MW erzeugt werden. Diese erzeugte Gesamtparkleistung würde an der Leistungsmessstelle 2 erfasst werden und der Parkregelung dann zur Verfügung stehen.

Gemäß der Regelungsstruktur der Fig. 3 erfolgt also die Erfassung einer Soll-Ist-Wert Differenz für die Parkleistung, dessen Ergebnis dann einem Regler zur Verfügung steht, der daraus einen Anlagen-Soll-Wert berechnet. Dabei wir dieser Anlagen-Soll-Wert an mehrere ggf. unterschiedliche Windenergieanlagen gegeben. Vorzugsweise erhalten diese aber alle denselben Eingangswert, der gleich wohl zu unterschiedlichen erzeugten Leistungen führen würde.

Darüber hinaus werden einige Umschaltungsmöglichkeiten vorgeschlagen, die anhand der Schalter $S_1$ bis $S_5$ veranschaulicht werden sollen. Der Schalter $S_1$ veranschaulicht, dass auch die Möglichkeit besteht, die Differenz zwischen Park-Soll-Wert $P_{Psoll}$ und Park-Ist-Wert $P_{Pist}$ nicht auf den Regler zu geben. Diese Möglichkeit reflektiert tatsächlich die Situation, dass gar kein Soll-Wert für die einzuspeisende Parkleistung $P_{Psoll}$ vorgegeben wird bzw. dieser 100 Prozent beträgt. In diesem Fall wird also keine Soll-Wertvorgabe wirksam, was durch den geöffneten Schalter $S_1$ veranschaulicht werden soll. Für diesen Fall gibt der Regler als Anlagen-Soll-Wert $P_{Asoll}$ 100 Prozent aus. Sämtliche Anlagensteuerungen 6 erhalten damit das Signal, dass sie insoweit keine Leistung zu reduzieren brauchen. Jede Windenergieanlage 100 bzw. $WT_1$, $WT_2$ und $WT_3$, kann so viel Leistung erzeugen, wie der jeweils vorherrschende Wind zulässt.

Ist der Schalter $S_1$ geschlossen, wird die Vorgabe des Anlagen-Soll-Wertes $P_{Asoll}$ abhängig von einem Vorgabewert der einzuspeisenden Parkleistung $P_{Psoll}$ aktiv. Für diesen Fall regelt zunächst der veranschaulichend gezeigte Regler $R_1$ den Anlagen-Soll-Wert $P_{Asoll}$. Hierzu kann der Regler $R_1$ beispielsweise als PI-Regler ausgelegt sein. Er hat also einen Proportionalanteil und einen Integralanteil. Die Differenzleistung $\Delta P_P$ wird also über den Proportionalanteil sofort in einen Teil des Anlagen-Soll-Wertes $P_{Asoll}$ umgesetzt und der Integralanteil kann versuchen, eine stationäre Genauigkeit zu erreichen. Um eine Anpassung an andere Betriebszustände des Windparks 112 oder des Versorgungsnetzes 120 berücksichtigen zu können, wird vorgeschlagen Regler zu wechseln. Dies veranschaulicht der Schalter $S_2$ mit dem beispielsweise auf den Regler $R_2$ umgeschaltet werden kann. Natürlich muss auch der nachfolgend gezeigte, unbenannte Schalter entsprechend umgeschaltet werden. Durch Punkte ist angedeutet, dass weitere Regler vorgesehen sein können, um auf diese umzuschalten.

Beispielsweise kann es zur Vermeidung von Schwingungen vorteilhaft sein, auf einen Integralanteil zu verzichten und einen reinen P-Regler zu verwenden. Dies kommt ggf. auch in Betracht, wenn ein weiterer Regelalgorithmus ergänzt werden soll. Die Reglerumschaltung, die der Regler $S_2$ veranschaulicht, kann auch die Umschaltung auf einen Regler selben Typs mit anderer Parametrierung sein. Insbesondere weisen komplexere Regler, aber auch der PI-Regler mehrere Parameter auf, die jeweils aufeinander abgestimmt sein sollten. Durch die Umschaltung zwischen Reglern wird somit immer gewährleistet, dass ein stimmiger Parametersatz vorliegt. Natürlich kann eine solche Umsetzung auch in einem Prozessrechner durch Zuweisung eines neuen Parametersatzes umgesetzt werden.

Weiter veranschaulicht die Fig. 3, dass eine Frequenzmesseinheit 8 vorgesehen ist, die die Netzfrequenz $f_N$ misst. Grundsätzlich kann diese Netzfrequenz auch im Parknetz 114 gemessen werden. Zur Veranschaulichung, aber auch in vielen Fällen in der praktischen Umsetzung, ist diese zentrale Messung der Netzfrequenz $f_N$ vorteilhaft. Diese Netzfrequenz $f_N$ wird unter anderem über den Schalter $S_3$ den Anlagensteuerungen 6 zugefügt. In dem gezeigten und oben erläuterten Betriebszustand ist der Schalter $S_3$ geöffnet und die Anlagensteuerungen 6 arbeiten somit ohne Berücksichtigung der Netzfrequenz, was die Einstellung der Leistungsregelung anbelangt. Natürlich müssen die Anlagen bei der Erzeugung der einzuspeisenden Ströme Frequenz und Phase des Netzes berücksichtigen. Diese Berücksichtigung soll durch diesen Schalter $S_3$ nicht betroffen sein.

Wird dieser Schalter $S_3$ nun geschlossen, wird die Netzfrequenz der Anlagensteuerung 6 zugefügt, was veranschaulichen soll, dass die Steuerung der jeweiligen Anlagenleistung $P_{A1}$, $P_{A2}$ bzw. $P_{A3}$ diese Netzfrequenz $f_N$ nun berücksichtigt. Die erzeugte Leistung kann also beispielsweise von jeder Anlagensteuerung im Falle eines Anstiegs der Netzfrequenz $f_N$ über einen vorher definierten Grenzwert oder Schwellwert reduziert werden, insbesondere schnell reduziert werden. Insbesondere in der praktischen Umsetzung kann aber die Netzfrequenz beider Anlagensteuerungen immer bekannt sein, schließlich wird sie für die Anpassung von der Frequenz und Phase benötigt, soll aber zur Bestimmung der Leistungshöhe hier nicht berücksichtigt werden. Der geschlossene Schalter $S_3$ symbolisiert hierbei also die Berücksichtigung der Netzfrequenz $f_N$ zur Bestimmung der Leistungshöhe $P_{A1}$, $P_{A2}$ bzw. $P_{A3}$.

Die Netzfrequenz kann aber auch von dem übergeordneten Regler, der den Anlagen-Soll-Wert $P_{Asoll}$ bestimmt, berücksichtigt werden. Dies soll durch den Schalter $S_4$ veranschaulicht werden. Dieser Schalter $S_4$ symbolisiert, dass ein frequenzabhängiger Regler R(f) den Anlagen-Soll-Wert $P_{Asoll'}$ auch mitbestimmt. Hierzu ist die Summierstelle 10 vorgesehen. Zu dem Regler $R_1$, oder $R_2$ je nach Schalterstellung $S_2$, kommt noch die Berechnung durch den Regler R(f). Die Ergänzung dieser beiden Regler kann aber auch anders als durch eine Aufsummierung erfolgen. Beispielsweise kann umgeschaltet werden auf einen Gesamtregler, der sowohl die Leistungsdifferenz des Parks $\Delta P_P$ als auch die Netzfrequenz $f_N$ berücksichtigt.

Der frequenzabhängige Regler bzw. frequenzabhängige Teilregler R(f) kann unmittelbar von der Frequenz abhängen, oder er kann alternativ oder zusätzlich von einer Frequenzänderung $\partial f/\partial t$ abhängen, was durch den Block 12 veranschaulicht wird. Der Block 12 zeigt eine partielle Ableitung der Frequenz nach der Zeit $\partial f/\partial t$, die auch in einem Prozessrechner durch eine Differenzenbildung oder anderweitig umgesetzt werden kann. Jedenfalls veranschaulicht der Schalter $S_5$, dass der Teilregler R(f) direkt von der Netzfrequenz $f_N$ oder von ihrer Änderung oder von beiden abhängen kann.

Es kann zweckmäßig sein, den Schalter $S_4$ zu schließen, wenn der Schalter $S_3$ geöffnet ist und umgekehrt, um nur auf eine Art und Weise, nämlich entweder zentral über den Teilregler R(f) oder in jeder einzelnen Anlagensteuerung 6 eine Frequenzabhängigkeit zu berücksichtigen. Eine gleichzeitige Berücksichtigung, wenn die betreffenden Regler entsprechend aufeinander abgestimmt sind, soll jedoch nicht ausgeschlossen werden.

Weiter wird darauf hingewiesen, dass die veranschaulichten Umschaltungen jeweils gezielt durch eine externe Eingabe, also ein externes Signal oder ein externer Indikator vorgenommen werden können, oder dass auch ein dieser Umschaltungen steuernder Algorithmus vorgesehen ist, der vorzugsweise von der Netzfrequenz und/oder ihrer zeitlichen Änderungen abhängt.

Bezogen auf die oben angesprochenen Regelungsgrundtypen entspricht der Regelungsgrundtyp 1 der in Fig. 3 gezeigten Situation, nämlich mit geöffneten Schaltern $S_1$, $S_3$ und $S_4$. Der Regelungsgrundtyp 2 entspricht der Darstellung der Fig. 3 aber abweichend mit dem Schalter $S_2$ in geschlossenem Zustand. Für diesen Regelungsgrundtyp 2 kann aber der Schalter $S_2$ unterschiedliche Regler $R_1$ oder $R_2$ oder andere auswählen.

Der Regelungsgrundtyp 3 entspricht der Situation der Fig. 3 aber mit geschlossenem Schalter $S_1$ und mit geschlossenem $S_3$. Es ist also zusätzlich eine frequenzabhängige Bestimmung der Leistungshöhe in jeder Anlagensteuerung 6 aktiv.

Dem Regelungsgrundtyp 4 entspricht die Situation der Figur 3 wobei der Schalter $S_1$ und der Schalter $S_4$ geschlossen sind. Es wird also zusätzlich ein Anlagen-Soll-Wert auch frequenzabhängig beeinflusst.

Ist zu diesem Regelungsgrundtyp 4 außerdem noch der Schalter $S_3$ geschlossen, so ist eine frequenzabhängige Leistungshöhenbestimmung in jeder Anlagensteuerung 6 außerdem aktiv, so kann diese Situation als Regelungsgrundtyp 5 bezeichnet werden. Auch für diese Regelungsgrundtypen 4 und 5 kann außerdem eine Umschaltung durch den Schalter $S_2$ erfolgen, also eine Auswahl zwischen dem Regler $R_1$, $R_2$ oder anderen angedeuteten Reglern.

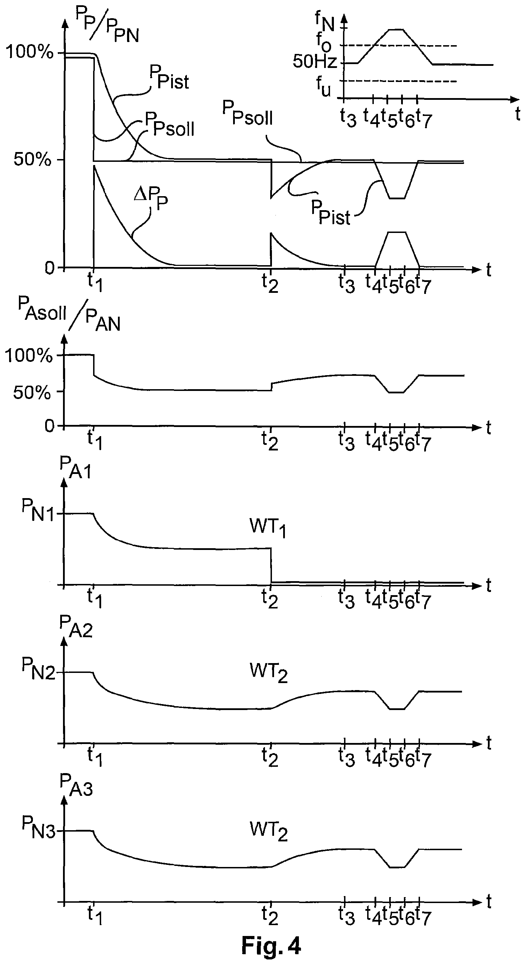

Zur Veranschaulichung einer möglichen Parkregelung zeigt Fig. 4 einige Zeitdiagramme. Allen Diagrammen liegt derselbe Zeitstrahl zugrunde. Das oberste Diagramm zeigt den Verlauf der Parkleistung, nämlich sowohl der vorgegebenen Parkleistung $P_{Psoll}$ als auch der jeweils vorhandenen Parkleistung $P_{Pist}$ als auch der Regeldifferenz zwischen Park-Soll-Leistung $P_{Psoll}$ und Park-Ist-Leistung $P_{Pist}$, die auch hier als $\Delta P_P$ bezeichnet wird. Diese drei Verläufe sind auf die Nennleistung des Parks $P_{PN}$ normiert bzw. der Einfachheit halber in Prozent angegeben.

Das zweite Diagramm zeigt den Anlagen-Soll-Wert $P_A$ jedenfalls in normierter Form nämlich als prozentualen Wert.

Die letzten drei Diagramme zeigen jeweils die erzeugte Leistung $P_{A1}$, $P_{A2}$ bzw. $P_{A3}$ bezogen auf die drei Windturbinen $WT_1$, $WT_2$ und $WT_3$ gemäß Fig. 3. Diese Anzahl 3 ist nur zur Veranschaulichung gewählt. Ein Windpark kann zwar allein aus drei Windenergieanlagen aufgebaut sein, üblicherweise weisen Windparks aber deutlich mehr Windenergieanlagen auf. Die Diagramme der Fig. 4 unterstellen, dass die Windbedingungen für jede Windenergieanlage $WT_1$, $WT_2$ und $WT_3$ die Erzeugung von Nennleistung ermöglicht, also die Erzeugung von $P_{N1}$, $P_{N2}$ bzw. $P_{N3}$. Die einzelnen Leistungen der Windenergieanlagen sind dabei auch jeweils in der Darstellung auf ihre Nennleistungen $P_{N1}$, $P_{N2}$ bzw. $P_{N3}$ bezogen dargestellt.

Das Diagramm startet nun mit einem Vorgabewert für die Parkleistung von 100 Prozent. Es liegt also keine Beschränkung vor. Zum Zeitpunkt $t_1$ wird der Park-Soll-Wert $P_{Psoll}$ auf 50 Prozent reduziert. Somit springt zunächst die Differenzleistung des Parks $\Delta P_P$ ebenfalls auf 50 Prozent an. Es liegt hierbei zurzeit eine Regelung gemäß Fig. 3 vor, wobei der Schalter $S_1$ geschlossen ist. Dieser auf 50 Prozent gesprungene Differenzwert der Parkleistung $\Delta P_P$ wird somit nun dem Regler $R_1$ zuge-

führt. Dieser Regler $R_1$ sei ein PI-Regler und somit springt der Anlagen-Soll-Wert, der auch als $P_{Asoll}$ bezeichnet werden kann, von 100 Prozent beispielsweise auf 75 Prozent. Aufgrund des I-Anteils verringert sich mit weiter zunehmender Zeit t der Soll-Wert $P_A$ dann auf 50 Prozent. Alle Anlagenleistungen $P_{A1}$, $P_{A2}$ und $P_{A3}$ sinken ebenfalls auf die Hälfte ihrer Nennleistung ab, wie dies von dem Soll-Wert $P_{Asoll}$ gefordert wird. Der sprunghafte Abfall auf 75 Prozent findet sich bei den Ist-Werten der einzelnen Anlagenleistungen aber nicht wieder, womit in diesem Diagramm eine gewisse Dynamik bzw. physikalische Trägheit angedeutet werden soll. Nach einiger Zeit sind nun alle Anlagenleistungen $P_{A1}$, $P_{A2}$ und $P_{A3}$ auf ihrer halben Nennleistung. Dem gezeigten Diagramm der Figur 4 liegt die Annahme zugrunde, dass alle drei Windenergieanlagen dieselbe Nennleistung $P_{N1} = P_{N2} = P_{N3}$ aufweisen. Der Ist-Wert der Parkleistung ist nun entsprechend auf 50 Prozent gesunken und entspricht somit dem vorgegebenen Park-Soll-Wert $P_{Psoll}$. Die beiden Graphen des Ist-Wertes $P_{Pist}$ und des Soll-Wertes $P_{Psoll}$ sind in dem oberen Diagramm nur zur besseren Sichtbarkeit mit einem geringen Abstand gezeichnet. Tatsächlich sind diese Werte für das Beispiel idealisierend identisch.

Es wird nun davon ausgegangen, dass zum Zeitpunkt $t_2$ die erste Anlage $WT_1$ ausfällt. Ihre Leistung $P_{A1}$ fällt somit schlagartig auf 0 ab. Im Ergebnis fällt somit auch die Parkleistung $P_{Pist}$ schlagartig ab und die Leistungsdifferenz $\Delta P_P$ des Parks springt um den entsprechenden Wert hoch. Auch der Anlagen-Soll-Wert $P_{Asoll}$ verändert sich nun und springt um einen kleinen Wert und steigt dann weiter an, weil nach wie vor als Regler $R_1$ ein PI-Regler zugrunde liegt.

Die erste Windenergieanlage $WT_1$ kann diesem geänderten Anlagen-Soll-Wert natürlich nicht folgen, weil sie ausgefallen ist. Die anderen beiden Anlagen $WT_2$ und $WT_3$ können aber ihre Leistungen erhöhen. Entsprechend erhöht sich auch die Parkleistung und diese kann wieder den Soll-Wert $P_{Psoll}$ erreichen. Die Parkleistung $P_{Pist}$ erreicht also wieder den Wert von 50 Prozent. Dafür liegen aber die beiden Anlagenleistungen $P_{A2}$ und $P_{A3}$ der zweiten und dritten Windenergieanlage etwa bei 75 Prozent Ihres Nennwertes $P_{N2}$ bzw. $P_{N3}$. Es ist zu beachten, dass der Park-Soll-Wert $P_{Psoll}$ seit dem Zeitpunkt $t_1$ unverändert bei 50 Prozent geblieben ist.

Zum Zeitpunkt $t_3$ entscheidet nun der Netzbetreiber, dass der Windpark auch zur frequenzabhängig gesteuerten Netzstabilisierung herangezogen werden soll. Dies war bisher nicht der Fall. Dabei soll diese Netzstabilisierung von einem zentralen Parkregler, also nicht von jeder Anlage einzeln, durchgeführt werden. Im Ergebnis bedeutet dies in der Veranschaulichung der Fig. 3, dass der Schalter $S_4$ geschlossen wird. Im Übrigen muss dabei auch der untere Teil des Schalters $S_5$ geschlossen sein. Es wird also zusätzlich ein frequenzabhängiger Regleranteil hinzu geschaltet. In dem Diagramm der Fig. 4 ist allerdings keinerlei Auswirkung zu erkennen. Das liegt daran, dass die Netzfrequenz zum Zeitpunkt $t_3$ noch etwa ihren nominellen Wert aufweist. Dazu ist erst ab $t_3$ beginnend die Frequenz $f_N$ in einem eingeschobenen Diagramm oben rechts dargestellt. Als Nennfrequenz wurden hier beispielhaft 50 Hertz angenommen, was in anderen Regionen der Welt beispielsweise 60 Hertz betragen kann.

Zwischen $t_3$ und $t_4$ beginnt jedoch die Netzfrequenz anzusteigen und überschreitet bei $t_4$ einen oberen Schwellwert $f_O$. Nun wird der frequenzabhängige Regler, der bei $t_3$ zugeschaltet wurde, aktiv und fordert eine Verringerung der Parkleistung, was dadurch erfolgt, dass der Anlagen-Soll-Wert $P_{Asoll}$ verringert wird. Der Park-Soll-Wert $P_{Psoll}$ bleibt unverändert bei 50 Prozent.

Die Frequenz erreicht dann bei $t_5$ ihren höchsten Wert und verbleibt dort bis $t_6$. Entsprechend erreicht der Anlagen-Soll-Wert $P_{Asoll}$ bei $t_5$ seinen lokal kleinsten Wert. Die Windenergieanlage $WT_1$ ist nach wie vor ausgefallen und die zweite und dritte Windenergieanlage $WT_2$ und $WT_3$ folgen dem Anlagen-Soll-Wert $P_{Asoll}$ und senken ihre Leistung $P_{A2}$ bzw. $P_{A3}$ entsprechend ab. Es ist auch zuerkennen, dass diese frequenzabhängige Verringerung des Anlagen-Soll-Wertes $P_{Asoll}$ sehr schnell erfolgt. Die Reglerdynamik dieses frequenzabhängigen Reglers, der in Fig. 3 als R(f) gezeigt ist, hat somit gemäß diesem Beispiel eine höhere Dynamik als der Regler $R_1$.

Jedenfalls nimmt die Frequenz bei $t_6$ wieder ab und unterschreitet bei $t_7$ den oberen Schwellwert. Somit steigt der Anlagen-Soll-Wert $P_{Asoll}$ bei $t_6$ wieder an und erreicht bei $t_7$ im Grunde den frequenzunabhängigen Soll-Wert. Die Anlagenleistungen $P_{A2}$ und $P_{A3}$ folgen entsprechend und bei $t_7$ erreicht somit auch der Wert der Parkleistung $P_{Pist}$ wieder die extern vorgegebenen 50 Prozent.

**Patentansprüche**

1. Verfahren zum Einspeisen elektrischer Leistung eines mehrere Windenergieanlagen (100) aufweisenden Windparks (112) in ein elektrisches Versorgungsnetz (120), wobei

   - jede der Windenergieanlagen (100) eine elektrische Anlagenleistung ($P_A$) bereitstellt und
   - die Summe der bereitgestellten Anlagenleistungen ($P_A$) als Parkleistung ($P_P$) in das elektrische Versorgungsnetz (120) eingespeist wird, und
   - ein und derselbe Anlagensollwert ($P_{Asoll}$) an jede der Windenergieanlagen (100) zur Vorgabe der bereitzustellenden Anlagenleistung ($P_A$) vorgegeben wird, und
   - der Anlagensollwert ($P_{Asoll}$) über einen Regler ($R_1$, $R_2$) geregelt wird, abhängig von einer Regelabweichung ($\Delta P$) als Vergleich der eingespeisten Parkleistung ($P_{Pist}$) mit einem Sollwert ($P_{Psoll}$) der einzuspeisenden Parkleistung ($P_P$).

**2.** Verfahren nach Anspruch 1,
**dadurch gekennzeichnet, dass**
der Regler als Anlagensollwert ($P_{Asoll}$) einen relativen, insbesondere prozentualen Sollwert, bezogen auf die jeweilige Nennleistung ($P_{AN}$) der Windenergieanlage (100) ausgibt.

**3.** Verfahren nach Anspruch 1 oder 2,
**dadurch gekennzeichnet, dass**

    - über ein Auswahlsignal,
    - abhängig von einer Netzsensitivität des elektrischen Versorgungsnetzes,
    - abhängig von einer Netzfrequenz,
    - abhängig von einer Netzfrequenzänderung und/oder
    - abhängig von einem Kurzschlussstromverhältnis

ein Reglertyp und/oder eine Parametrierung ausgewählt oder verändert wird.

**4.** Verfahren nach einem der vorstehenden Ansprüche,
**dadurch gekennzeichnet, dass** ein bzw. der Reglertyp auswählbar ist aus einem der Reglertypen der Liste umfassend einen

    - P-Regler,
    - PI-Regler,
    - PT1-Regler und
    - Hysterese-Regler.

**5.** Verfahren nach einem der vorstehenden Ansprüche,
**dadurch gekennzeichnet, dass**
eine Netzfrequenz ($f$) der Spannung ($U$) des Versorgungsnetzes (120) erfasst wird und der Anlagensollwert ($P_{Asoll}$) von der Netzfrequenz ($f$) und/oder einer Änderung der Netzfrequenz ($\partial f/\partial t$) abhängig ist und/oder jede Anlage ihre Anlagenleistung ($P_A$) abhängig von dem Anlagensollwert ($P_{Asoll}$) und der Netzfrequenz und/oder einer Änderung der Netzfrequenz ($\partial f/\partial t$) einstellt.

**6.** Verfahren nach einem der vorstehenden Ansprüche,
**dadurch gekennzeichnet, dass**
der Anlagensollwert ($P_{Asoll}$) von einer Zentralsteuereinheit des Windparks (112) für jede Windenergieanlage (100) des Windparks (112) vorgegeben wird und/oder dass eine bzw. die erfasste Netzfrequenz allen Windenergieanlagen (100) des Windparks (112) von der Zentralsteuereinheit bereitgestellt, insbesondere übertragen wird.

**7.** Windpark zum Einspeisen, elektrischer Leistung in ein Versorgungsnetz, wobei der Windpark zum Einspeisen elektrischer Leistung ein Verfahren nach einem der vorstehenden Ansprüche verwendet.

**Claims**

**1.** Method for supplying the electric power of a wind park (112) comprising several wind turbines (100) into an electric power supply grid (120), whereby

    - each of the wind turbines (100) provides an electric turbine output ($P_A$) and
    - the sum of the provided turbine outputs ($P_A$) is supplied to the electric power supply grid (120) as wind park output ($P_P$), and
    - one and the same turbine target value ($P_{Aset}$) is specified for each of the wind turbines (100) as a specification of the turbine output ($P_A$) that is to be provided, and
    - the turbine target value ($P_{Aset}$) is controlled via a controller ($R_1$, $R_2$) based on a control deviation ($\Delta P$), as a comparison of the supplied wind park output ($P_{Pactual}$) and a target value ($P_{Pset}$) of the wind park output ($P_P$) that is to be supplied.

**2.** Method according to Claim 1,
**characterized in that**
the controller issues as the turbine target value ($P_{Aset}$) a relative, in particular percentage target value in relation to the respective nominal power ($P_{AN}$) of the wind turbine (100).

**3.** Method according to Claim 1 or 2,
**characterized in that**
a controller type and/or a parametrization is selected or changed

    - via a selection signal,
    - depending on a grid sensitivity of the electric power supply grid,
    - depending on a grid frequency,
    - depending on a change in grid frequency and/or
    - depending on a short circuit ratio.

**4.** Method according to one of the above claims, **characterized in that** one or the controller type is selectable from the controller types in the list comprising a

    - P-controller,
    - PI-controller,
    - PT1-controller and
    - hysteresis controller.

**5.** Method according to one of the above claims,
**characterized in that**
a grid frequency ($f$) of the voltage ($U$) of the supply grid (120) is recorded and the turbine target value ($P_{Aset}$) depends on the grid frequency ($f$) and/or a change in the grid frequency ($\partial f/\partial t$) and/or each turbine sets its output ($P_A$) based on the turbine target value ($P_{Aset}$) and the grid frequency and/or a change in the grid frequency ($\partial f / \partial t$).

6. Method according to one of the above claims, **characterized in that** the turbine target value ($P_{Aset}$) is specified for each wind turbine (100) of the wind park (112) by a central control unit of the wind park (112) and/or that a or the recorded grid frequency is provided, in particular transmitted, to all wind turbines (100) of the wind park (112) by the central control unit.

7. Wind park for supplying electric power into a supply grid, with the wind park applying a method according to one of the above claims to supply electric power.

**Revendications**

1. Procédé servant à injecter une puissance électrique d'un parc éolien (112) présentant plusieurs éoliennes (100) dans un réseau d'alimentation (120) électrique, dans lequel

   - chacune des éoliennes (100) fournit une puissance d'installation ($P_A$) électrique, et
   - la somme des puissances d'installation ($P_A$) fournies est injectée en tant que puissance de parc ($P_P$) dans le réseau d'alimentation (120) électrique, et
   - une seule et même valeur théorique d'installation ($P_{Asoll}$) est spécifiée sur chacune des éoliennes (100) pour spécifier la puissance d'installation ($P_A$) à fournir, et
   - la valeur théorique d'installation ($P_{Asoll}$) est réglée par l'intermédiaire d'un régulateur ($R_1$, $R_2$) en fonction d'un écart de régulation ($\Delta P$) en tant que comparaison entre la puissance de parc ($P_{ist}$) injectée et une valeur théorique ($P_{Psoll}$) de la puissance de parc ($P_P$) à injecter.

2. Procédé selon la revendication 1, **caractérisé en ce que** le régulateur émet, en tant que valeur théorique d'installation ($P_{Asoll}$), une valeur théorique relative, en particulier en pourcentage, par rapport à la puissance nominale ($P_{AN}$) respective de l'éolienne (100).

3. Procédé selon la revendication 1 ou 2, **caractérisé en ce que** un type de régulateur et/ou un paramétrage est/sont choisi(s) ou modifié(s)

   - par l'intermédiaire d'un signal de sélection,
   - en fonction d'une sensibilité de réseau du réseau d'alimentation électrique,
   - en fonction d'une fréquence de réseau,
   - en fonction d'une modification de fréquence de réseau, et/ou
   - en fonction d'un rapport de courant de court-circuit.

4. Procédé selon l'une quelconque des revendications précédentes, **caractérisé en ce qu'**un ou le type de régulateur peut être sélectionné à partir d'un des types de régulateur de la liste comprenant

   - un régulateur P,
   - un régulateur PI,
   - un régulateur PT1, et
   - un régulateur d'hystérèse.

5. Procédé selon l'une quelconque des revendications précédentes, **caractérisé en ce que** une fréquence de réseau (f) de la tension (U) du réseau d'alimentation (120) est détectée, et la valeur théorique d'installation ($P_{Asoll}$) dépend de la fréquence de réseau (f) et/ou d'une modification de la fréquence de réseau ($\partial f / \partial t$), et/ou chaque installation règle sa puissance d'installation ($P_A$) en fonction de la valeur théorique d'installation ($P_{Asoll}$) et de la fréquence de réseau et/ou d'une modification de la fréquence de réseau ($\partial f / \partial t$).

6. Procédé selon l'une quelconque des revendications précédentes, **caractérisé en ce que** la valeur théorique d'installation ($P_{Asoll}$) est spécifiée par une unité de commande centrale du parc éolien (112) pour chaque éolienne (100) du parc éolien (112), et/ou qu'une ou la fréquence de réseau détectée est fournie, en particulier transmise, à toutes les éoliennes (100) du parc éolien (112) par l'unité de commande centrale.

7. Parc éolien servant à injecter une puissance électrique dans un réseau d'alimentation, dans lequel le parc éolien servant à injecter une puissance électrique utilise un procédé selon l'une quelconque des revendications précédentes.

**Fig. 1**

**Fig. 2**

**Fig. 3**

**Fig. 4**

**EP 2 989 321 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050042098 A1
- DE 102009030725 A1
- DE 102011112025 A1